(19) Europäisches Patentamt
European Patent Office
Office européen des brevets

(11) **EP 2 125 479 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(21) Anmeldenummer: **08701364.5**

(22) Anmeldetag: **09.01.2008**

(51) Int Cl.:
**B61G 11/16** *(2006.01)* **F16F 7/12** *(2006.01)*

(86) Internationale Anmeldenummer:
**PCT/EP2008/050204**

(87) Internationale Veröffentlichungsnummer:
**WO 2008/092718 (07.08.2008 Gazette 2008/32)**

(54) **STOSSENERGIEVERZEHRELEMENT FÜR EIN FAHRZEUG**

IMPACT ENERGY ABSORPTION ELEMENT FOR A VEHICLE

ÉLÉMENT DE DISSIPATION D'ÉNERGIE DE CHOC POUR VÉHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.01.2007 DE 102007005421**

(43) Veröffentlichungstag der Anmeldung:
**02.12.2009 Patentblatt 2009/49**

(73) Patentinhaber: **Bombardier Transportation GmbH**
**10785 Berlin (DE)**

(72) Erfinder: **Fecske, Thomas**
**10439 Berlin (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
**EP-A- 0 546 352 EP-A- 0 793 035**
**WO-A-00/30916 DE-A1- 2 624 188**
**US-A- 5 732 801 US-A1- 2002 167 183**

## Beschreibung

Die vorliegende Erfindung betrifft ein Stoßenergleverzehrelement, Insbesondere für ein Schienenfahrzeug, mit einem Elementkörper, der eine Längsachse und eine senkrecht zur Längsachse verlaufende Querachse definiert, wobei der Elementkörper wenigstens eine erste Sektion zum Verzehr von Stoßenergie umfasst, die sich in Richtung der Längsachse erstreckt und eine erste Biegesteifigkeit um die Querachse aufweist. Sie betrifft weiterhin ein Fahrzeug, insbesondere ein Schienenfahrzeug mit einem solchen erfindungsgemäßen Stoßenergieverzehrelement.

Moderne Schienenfahrzeuge werden in der Regel an ihren Fahrzeugenden mit einem oder mehreren vergleichsweise einfach austauschbaren Stoßenergleverzehrelementen (so genannte Crashabsorber) versehen. Die Stoßenergleverzehrelemente dienen im Falle eines Zusammenstoßes (mit einem Hindernis wie beispielsweise einem anderen Schienenfahrzeug), dessen Stoßenergie das im Normalbetrieb zu erwartende Maß überschreitet, dazu, durch definierte Verformung oder Zerstörung definiert Stoßenergie aufzunehmen, um die Einleitung übermäßlger Stoßenergie in die übrige, weniger leicht auszutauschende Struktur des Fahrzeugs und damit die Beschädigung dieser übrigen Fahrzeugstruktur sowie das Verletzungsrisiko für Passagiere zumindest zu reduzieren, vorzugsweise aber vollständig zu vermeiden.

Derartige Stoßenergieverzehrelemente sind beispielsweise aus der DE 201 17 536 U1 und der EP 0 831 005 A1 bekannt. Sie umfassen ein oder mehrere im Wesentlichen rohrförmige Elemente, die sich in Richtung der Längsachse erstrecken und im Crashfall entlang der Längsachse belastet werden. Dabei erfahren sie durch in Richtung der Längsachse fortschreitende lokale Faltung bzw. Ausbeulung eine Verformung, über welche der gewünschte Abbau der Stoßenergie erfolgt.

In der Vergangenheit wurden derartige Stoßenergieverzehrelemente unter der Annahme getestet, dass kein vertikaler Versatz zwischen dem dem Stoßpartner zugewandten freien Ende des Stoßenergieverzehrelements und der Kontaktfläche mit dem Stoßpartner vorliegt, bei der es sich gegebenenfalls ebenfalls um das freie Ende eines Stoßenergleverzehrelements des Stoßpartners handeln kann. Zwischenzeitlich hat es sich jedoch gezeigt, dass diese Annahme nicht in ausreichendem Maße den realen

Stoßbedingungen entspricht. In der Realität kann bei Schienenfahrzeugen zwischen den Kontaktbereichen der Stoßpartner ein Versatz um bis zu 100 mm auftreten. Das Europäische Komitee für Standardisierung entwirft demgemäß derzeit einen neuen europäischen Standard, der sich auf Anforderungen an die Crashbeständigkeit von Wagenkästen für Schienenfahrzeuge bezieht. Dieser Standard verlangt, dass ein vorgegebener Validierungsprozess (Simulation) für ein Schienenfahrzeug nachweist, dass mit einem anfänglichen vertikalen Versatz von 40 mm der Kontakt wenigstens eines Radpaares jedes Fahrwerks mit der Schiene über den gesamten Kollisionsvorgang gewährleistet ist (siehe European Standard Draft prEN 15227, "Railway Applications - Crashworthiness requirements for railway vehicle bodies", Abschnitt 7.2, European Committee for Standardization, April 2005).

Ein solcher vertikaler Versatz bringt eine Reihe von Problemen mit sich. Eines der Hauptprobleme ist das Biegemoment um eine zur Längsachse des Stoßenergieverzehrelements senkrecht verlaufende, horizontale Querachse des Stoßenergieverzehrelements, das bei einem solchen versetzten Stoß über das freie Ende in das Stoßenergieverzehrelements eingeleitet wird. Dieses Biegemoment kann zu einer globalen Biegeverformung des Stoßenergieverzehrelements entlang seiner Längsachse bis hin zum Abknicken führen, welche den gleichmäßigen Prozess der lokalen Energieabsorption, beispielsweise einen lokalen Faltungsprozess oder einen lokal fortschreitenden Zerstörungsprozess, reduziert oder sogar unterbricht.

Als Konsequenz dieser globalen Biegeverformung kann es beispielsweise in Fällen einer Kollision zweier Schienenfahrzeuge mit solchen Stoßenergieverzehrelementen zu einer Rotation des Kontaktbereichs zwischen den Stoßenergieverzehrelementen um die horizontale Querachse kommen. Geht diese Rotation weit genug, kann es sein, dass die beiden beteiligten Stoßenergieverzehrelemente aneinander abgleiten und es zu einem so genannten Aufklettern des einen Fahrzeugs auf das andere Fahrzeug kommt. Bei ausreichendem Rotationswinkel kann dies auch der Fall sein, wenn die Stoßenergieverzehrelemente so genannte Aufkletterschutzeinrichtungen, beispielsweise in Querrichtung verlaufende Rippen oder dergleichen aufweisen, die in diesem Fall beispielsweise durch Abscheren versagen.

Eine weitere Konsequenz dieser globalen Biegeverformung und der Unterbrechung des gleichmäßigen lokalen Prozess der Energieabsorption ist eine dramatische Reduktion der Energieabsorptionsfähigkeit des Stoßenergieverzehrelements. Dies führt zu erhöhten Belastungen und Beschleunigungen der übrigen Fahrzeugstruktur sowie der Passagiere des Fahrzeuges, welche unbedingt zu vermeiden sind.

Stoßenergieverzehrelemente mit sektionsweise unterschiedlicher aber über die jeweilige Sektion konstanter Biegesteifigkeit um die Querachse sind aus der EP 0 548 352 A1, der US 5,732,801, der DE 26 24 188 A1 und der US 2002/167183 A1 bekannt.

Der vorliegenden Erfindung liegt daher die Aufgabe zu Grunde, ein Stoßenergieverzehrelement der eingangs genannten Art zur Verfügung zu stellen, welches die oben genannten Nachteile nicht oder zumindest in deutlich geringerem Maße aufweist und insbesondere bei einem horizontalen und/oder vertikalen Versatz der Stoßpartner das Risiko einer globalen Biegeverformung des Stoßenergleverzehrelements zumindest reduziert.

Die vorliegende Erfindung löst diese Aufgabe ausgehend von einem Stoßenergleverzehrelement gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man bei einem horizontalen und/oder vertikalen Versatz der Stoßpartner das Risiko einer globalen Biegeverformung des Stoßenergleverzehrelements deutlich reduzieren kann, wenn der Elementkörper des Stoßenergleverzehrelements in seiner Längsrichtung in wenigstens zwei separate Sektionen unterschiedlicher Biegesteifigkeit um eine Querachse des Elementkörpers unterteilt ist. Mit anderen Worten wird über die beiden Sektionen in Richtung der Längsachse des Elementkörpers eine definierte Abstufung der Biegesteifigkeit des Elementkörpers vorgenommen.

Die Abstufung der Biegesteifigkeit des Elementkörpers, mithin also die Unterteilung des Elementkörpers in Sektionen mit jeweils vorgebbarer, gegebenenfalls unterschiedlicher Länge (d. h. Abmessung in Richtung der Längsachse), jedenfalls aber unterschiedlicher Biegesteifigkeit führt dazu, dass sich eine globale Biegeverformung, die aufgrund eines versetzten Stoßes auftreten könnte, zunächst auf die Sektion mit der geringeren bzw. geringsten Biegesteifigkeit konzentriert. Je nach Länge des Elementkörpers bzw. Anzahl und Länge der einzelnen Sektionen konzentriert sich die Biegeverformung auf einen vergleichsweise kurzen Abschnitt, während die andere(n) Sektion(en) zumindest einer deutlich geringeren Biegeverformung untertiegen. Führt die Biegeverformung dabei zu einer Reduktion oder sogar Unterbrechung des lokalen Prozesses der Energieabsorption (lokale Faltung und/oder lokale Zerstörung) reduziert sich dieser Effekt zunächst nur auf die Sektion mit der geringsten Biegesteifigkeit. Bis die nächste Sektion betroffen ist, kann aber bereits ausreichend Stoßenergie abgebaut sein, dass es zu keiner solchen unerwünschten Biegeverformung dieser nachfolgenden Sektion mehr kommt und bei dieser dann der gewünschte Energieabsorptionsprozess abläuft.

Gemäß einem Aspekt der Erfindung betrifft diese daher ein Stoßenergieverzehrelement, Insbesondere für ein Schienenfahrzeug, mit einem Elementkörper, der eine Längsachse und eine senkrecht zur Längsachse verlaufende Querachse definiert. Der Elementkörper umfasst wenigstens eine erste Sektion zum Verzehr von Stoßenergie, die sich in Richtung der Längsachse erstreckt und eine über die Länge der ersten Sektion im Wesentlichen gleich bleibende erste Biegesteifigkeit um die Querachse aufweist. Der Elementkörper umfasst weiterhin wenigstens eine zweite Sektion zum Verzehr von Stoßenergie, die sich in Richtung der Längsachse erstreckt und eine über die Länge der zweiten Sektion im Wesentlichen gleich bleibende zweite Biegesteifigkeit um die Querachse aufweist. Die erste Sektion und die zweite Sektion sind in Richtung der Längsachse benachbart angeordnet. Weiterhin ist die erste Biegesteifigkeit von der zweiten Biegesteifigkeit verschieden.

Erfindungsgemäß beträgt die zweite Biegesteifigkeit das $k$-fache der ersten Biegesteifigkeit, wobei der Faktor $k$ den Wert 1,05 bis 1,40, vorzugsweise 1,10 bis 1,30, weiter vorzugsweise 1,10 bis 1,25, beträgt. Hiermit lässt sich im Verlauf der Verformung eine besonders günstige Aufteilung zwischen zwei benachbarten Sektionen erzielen.

Die Abstufung der Biegesteifigkeit des Elementkörpers In seiner Längsrichtung kann auf beliebige geeignete Weise erfolgen. So kann die Abstufung der Biegesteifigkeit beispielsweise über eine unterschiedliche Geometrie und/ oder unterschiedliche Werkstoffeigenschaften der Sektionen erzielt werden.

Bei bevorzugten, weil einfach herzustellenden Varianten des erfindungsgemäßen Stoßenergleverzehrelements erfolgt zumindest eine geometrische Abstufung der Biegesteifigkeit B, welche sich als das Produkt aus dem Elastizitätsmodul $E$ des Werkstoffs in Längsrichtung der Sektion und dem Flächenträgheitsmoment $I$ der Sektion um die Querachse darstellen lässt als:

$$B = E \cdot I. \hspace{4cm} (1)$$

Hierzu weist die erste Sektion in einer Ebene senkrecht zur Längsachse einen ersten Querschnitt mit einem ersten Flächenträgheitsmoment um die Querachse, während die zweite Sektion in einer Ebene senkrecht zur Längsachse einen zweiten Querschnitt mit einem zweiten Flächenträgheitsmoment um die Querachse aufweist. Das erste Flächenträgheitsmoment ist von dem zweiten Flächenträgheitsmoment verschieden, um so die Abstufung der Biegesteifigkeit B zu erzielen. Insbesondere ist vorgesehen, dass das erste Flächenträgheitsmoment kleiner ist als das zweite Flächenträgheitsmoment.

Die sektionsweise Abstufung des Flächenträgheitsmoments kann beispielsweise dadurch erzielt werden, dass in einer Ebene senkrecht zur Längsachse bei gleicher Abmessung der Sektionen in Richtung der Querachse die Abmessungen der jeweiligen Sektion senkrecht zur Querachse variiert werden. Bei Hohlkörpern kann hierzu weiterhin vorgesehen sein, die Dicke der den Hohlkörper bildenden Wände und/oder den Abstand dieser Wände von der Querachse zu erhöhen. Bei bevorzugten Varianten der Erfindung weist die erste Sektion daher einen ersten Wandabschnitt auf, der einen ersten Querschnittsteil des ersten Querschnitts ausbildet, wobei der erste Querschnittsteil einen ersten Flächenschwerpunkt aufweist, der in der Ebene des ersten Querschnitts einen ersten Abstand von der Querachse aufweist. Die zweite Sektion weist einen zweiten Wandabschnitt auf, der einen zweiten Querschnittsteil des zweiten Querschnitts ausbildet, wobei der zweite Querschnittsteil einen zweiten Flächenschwerpunkt aufweist, der in der Ebene des zweiten Querschnitts einen zweiten Abstand von der Querachse aufweist. Der erste Abstand ist von dem zweiten Abstand verschieden, um die Abstufung des Flächenträgheitsmoment zu erzielen. Insbesondere ist der erste Abstand kleiner als der zweite Abstand.

Bei weiteren Varianten eines erfindungsgemäßen Stoßenergieverzehrelements, welches aus einzelnen Wandelementen aufgebaut ist, wird zur Abstufung des Flächenträgheitsmoments die Wandstärke der Wandelemente sektionsweise variiert. Demgemäß kann vorgesehen sein, dass die erste Sektion wenigstens einen ersten Wandabschnitt aufweist, der wenigstens einen ersten Querschnittsteil des ersten Querschnitts ausbildet und eine erste Wandstärke aufweist. Die zweite Sektion weist wenigstens einen zweiten Wandabschnitt auf, der wenigstens einen zweiten Querschnittsteil des zweiten Querschnitts ausbildet und eine zweite Wandstärke aufweist. Schließlich ist die erste Wandstärke von der zweiten Wandstärke verschieden, wobei insbesondere vorgesehen sein kann, dass die erste Wandstärke kleiner ist als die zweite Wandstärke.

Diese sektionsweise Abstufung des Flächenträgheitsmoments lässt sich grundsätzlich auf Sektionen mit beliebig geformten Wandabschnitten anwenden. Besonders einfach herzustellende Konfigurationen ergeben sich, wenn der erste Wandabschnitt und/oder der zweite Wandabschnitt von der Querachse beabstandet ist und insbesondere der erste Wandabschnitt und/oder der zweite Wandabschnitt insbesondere einen im Wesentlichen rechteckförmigen Querschnitt aufweist.

Bei weiteren erfindungsgemäßen Stoßenergieverzehrelementen wird eine sektionsweise Abstufung der Biegesteifigkeit über den bzw. die für die jeweilige Sektion verwendeten Werkstoffe erzielt. Dies hat gegebenenfalls den Vorteil, dass die Abstufung der Biegesteifigkeit bei gleicher Geometrie der Sektionen erzielt werden kann, was gegebenenfalls die Verbindung der Sektionen vereinfacht. Bevorzugt ist daher bei diesen Varianten vorgesehen, dass zumindest ein erster Sektionsteil der ersten Sektion aus einem ersten Werkstoff gebildet ist, der in Richtung der Längsachse einen ersten Elastizitätsmodul aufweist, und zumindest ein zweiter Sektionsteil der zweiten Sektion aus einem zweiten Werkstoff gebildet ist, der in Richtung der Längsachse einen zweiten Elastizitätsmodul aufweist. Der erste Elastizitätsmodul ist von dem zweiten Elastizitätsmodul verschieden, wobei insbesondere vorgesehen sein kann, dass der erste Elastizitätsmodul kleiner ist als der zweite Elastizitätsmodul.

Vorzugsweise erstreckt sich der erste Sektionsteil in Richtung der Längsachse im wesentlichen über die gesamte erste Sektion, sodass über die gesamte Sektion gleichbleibende Verhältnisse herrschen. Aus demselben Grund erstreckt sich zusätzlich oder alternativ auch der zweite Sektionsteil in Richtung der Längsachse im wesentlichen über die gesamte zweite Sektion.

Die über die sektionsweise Abstufung erzielte Erhöhung der Biegesteifigkeit kann in beliebiger Richtung entlang der Längsachse erfolgen. So kann vorgesehen sein, dass die Biegesteifigkeit der Sektionen zum vorderen, freien Ende des Stoßenergieverzehrelements hin zunimmt. Bevorzugt ist jedoch vorgesehen, dass die Biegesteifigkeit der Sektionen sektionsweise zum hinteren, in der Regel am Fahrzeug befestigten Ende des Stoßenergieverzehrelements hin zunimmt. Dies hat den Vorteil, dass die Auslenkungen, die im Crashfall zunächst an der Sektionen mit der geringsten Biegesteifigkeit auftreten, keine Auswirkung auf die Position der näher am Fahrzeug angeordneten Sektionen höherer Biegesteifigkeit haben. Vorzugsweise ist daher vorgesehen, dass der Elementkörper ein freies Ende aufweist, das im Betrieb einem Stoßpartner zugewandt ist, die erste Sektion näher an dem freien Ende angeordnet ist als die zweite Sektion und die erste Biegesteifigkeit kleiner ist als die zweite Biegesteifigkeit.

Um eine feinere sektionsweise Abstufung der Biegesteifigkeit über die Länge des Stoßenergieverzehrelements zu erzielen, sind vorzugsweise mehr als zwei Sektionen unterschiedlicher Biegesteifigkeit vorgesehen. Bevorzugt ist daher vorgesehen, dass der Elementkörper wenigstens eine dritte Sektion zum Verzehr von Stoßenergie umfasst, die sich in Richtung der Längsachse erstreckt und eine dritte Biegesteifigkeit um die Querachse aufweist. Die dritte Biegesteifigkeit ist dabei von der ersten Biegesteifigkeit und/oder der zweiten Biegesteifigkeit verschieden.

Vorzugsweise nimmt auch hier die Biegesteifigkeit ausgehend vom freien Ende zu. Demgemäß ist vorgesehen, dass der Elementkörper ein freies Ende aufweist, das im Betrieb einem Stoßpartner zugewandt ist, die erste Sektion näher an dem freien Ende angeordnet ist als die zweite Sektion und die zweite Sektion näher an dem freien Ende angeordnet ist als die dritte Sektion. Die erste Biegesteifigkeit ist kleiner als die zweite Biegesteifigkeit, während die zweite Biegesteifigkeit kleiner ist als die dritte Biegesteifigkeit. Bevorzugt ist die erste Sektion an dem freien Ende angeordnet, während die dritte Sektion an dem anderen Ende des Elementkörpers angeordnet ist. Die dritte Biegesteifigkeit beträgt das $j$-fache der ersten Biegesteifigkeit ist, wobei der Faktor $j$ den Wert 2,0 bis 3,0, vorzugsweise 2,3 bis 2,8, weiter vorzugsweise 2,4 bis 2,6, beträgt.

Die sektionsweise Abstufung der Biegesteifigkeit kann einen beliebigen geeigneten Verlauf entlang der Längsachse aufweisen. Insbesondere kann vorgesehen sein, dass zumindest abschnittsweise entlang der Längsachse zunächst ein Anstieg der Biegesteifigkeit und dann wiederum eine Reduktion der Biegesteifigkeit vorgesehen ist. Bei bevorzugten Varianten des erfindungsgemäßen Stoßenergieverzehrelements mit einem günstigen, gleichmäßigen Verformungsverlauf umfasst der Elementkörper eine Mehrzahl von $N$ in Richtung der Längsachse seriell angeordneten Sektionen, wobei die Sektionen jeweils eine entlang der Längsachse im Wesentlichen konstante Biegesteifigkeit aufweisen und die Biegesteifigkeit der Sektionen (von Sektion zu Sektion) in Richtung der Längsachse ansteigt. Besonders günstig ist es, wenn der Anstieg kontinuierlich, also von Sektion zu Sektion erfolgt. Es ist jedoch auch möglich, dass benachbarte Sektionen gegebenenfalls auch dieselbe Biegesteifigkeit aufweisen.

Der Anstieg der Biegesteifigkeit kann grundsätzlich einen beliebigen geeigneten Verlauf aufweisen. Besonders günstige Energieabsorption erzielt man, wenn die Sektionen im Wesentlichen die gleiche Länge in Richtung der Längsachse aufweisen und die Biegesteifigkeit der Sektionen (von Sektion zu Sektion) bezogen auf die Nummer $N$ der jeweiligen Sektion im Wesentlichen linear ansteigt.

Wie bereits erwähnt, erfolgt der Anstieg der Biegesteifigkeit bevorzugt ausgehend von dem freien Ende. Vorzugsweise ist daher vorgesehen, dass der Elementkörper ein freies Ende aufweist, das im Betrieb einem Stoßpartner zugewandt ist, und die Biegesteifigkeit der Sektionen ausgehend von dem freien Ende des Elementkörpers ansteigt.

Das Stoßenergieverzehrelement kann grundsätzlich eine beliebige für den Energieverzehr geeignete Gestaltung aufweisen. Besonders vorteilhaft lässt sich die vorliegende Erfindung aber im Zusammenhang mit Hohlkörpern anwenden. Vorzugsweise ist daher vorgesehen, dass der Elementkörper rohrförmig ausgebildet ist. Besonders einfach herzustellende Varianten erzielt man, wenn das Stoßenergieverzehrelement zumindest abschnittsweise einen kastenförmigen Aufbau aufweist. Dieser kann dann beispielsweise als einfache Schweißkonstruktion konzipiert sein. Vorzugsweise ist daher vorgesehen, dass wenigstens eine der Sektionen des Elementkörpers in einer Ebene senkrecht zur Längsachse einen Querschnitt mit im Wesentlichen rechteckiger Außenkontur aufweist.

Besonders einfach in ein Fahrzeug zu integrierende Stoßenergieverzehrelemente ergeben sich, wenn die Außenkontur des Stoßenergieverzehrelements abschnittsweise über seine Länge im Wesentlichen gleichbleibend ausgebildet ist. Bevorzugt ist daher vorgesehen, dass die erste Sektion und die zweite Sektion in einer die Längsachse enthaltenden Schnittebene eine Außenabmessung aufweisen, welche entlang der Längsachse im Wesentlichen konstant ist, wobei die Außenabmessung der ersten Sektion und der zweiten Sektion insbesondere im wesentlichen identisch ist.

Das erfindungsgemäße Stoßenergieverzehrelement kann im Übrigen analog zu herkömmlichen Stoßenergieverzehrelementen aufgebaut sein. Insbesondere können bei aus einem oder mehreren Hohlkörpern aufgebauten Elementkörpern senkrecht zur Längsachse angeordnete Trennelemente, beispielsweise Trennwände oder dergleichen, vorgesehen sein, welche eine definiert fortschreitende lokale Energieabsorption, beispielsweise eine definiert fortschreitende lokale Faltung und/oder Zerstörung unterstützen. Besonders günstige Eigenschaften hinsichtlich der Energieabsorption ergeben sich dabei, wenn im Übergangsbereich zwischen der ersten Sektion und der zweiten Sektion ein solches Trennelement, insbesondere eine Trennwand, vorgesehen ist. Dabei ist vorzugsweise vorgesehen, dass das Trennelement eine Haupterstreckungsebene aufweist, die im Wesentlichen senkrecht zur Längsachse verläuft.

Die vorliegende Erfindung betrifft weiterhin ein Schienenfahrzeug mit einem erfindungsgemäßen Stoßenergieverzehrelement. Vorzugsweise ist das Stoßenergieverzehrelement dabei an einem der Ende des Schienenfahrzeugs vorgesehen.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigt:

Figur 1    eine schematische perspektivische Ansicht einer bevorzugten Ausführungsform des erfindungsgemäßen Stoßenergieverzehrelements;

Figur 2    einen schematische Seitenansicht des Stoßenergieverzehrelements aus Figur 1, das an einem erfindungsgemäßen Schienenfahrzeug montiert ist;

Figur 3    ein Diagramm zum Verhältnis der Biegesteifigkeiten der einzelnen Sektionen des Stoßenergieverzehrelements aus Figur 1 zur Biegesteifigkeit der ersten Sektion;

Figur 4    einen schematischen Schnitt durch das Stoßenergieverzehrelement entlang Linie IV-IV aus Figur 2;

Figur 5    einen schematischen Schnitt durch das Stoßenergieverzehrelement entlang Linie V-V aus Figur 2;

Figur 6    einen schematische Seitenansicht des Stoßenergieverzehrelements aus Figur 1 nach einem Crash;

Figur 7    einen schematische Seitenansicht eines herkömmlichen Stoßenergieverzehrelements nach einem Crash;

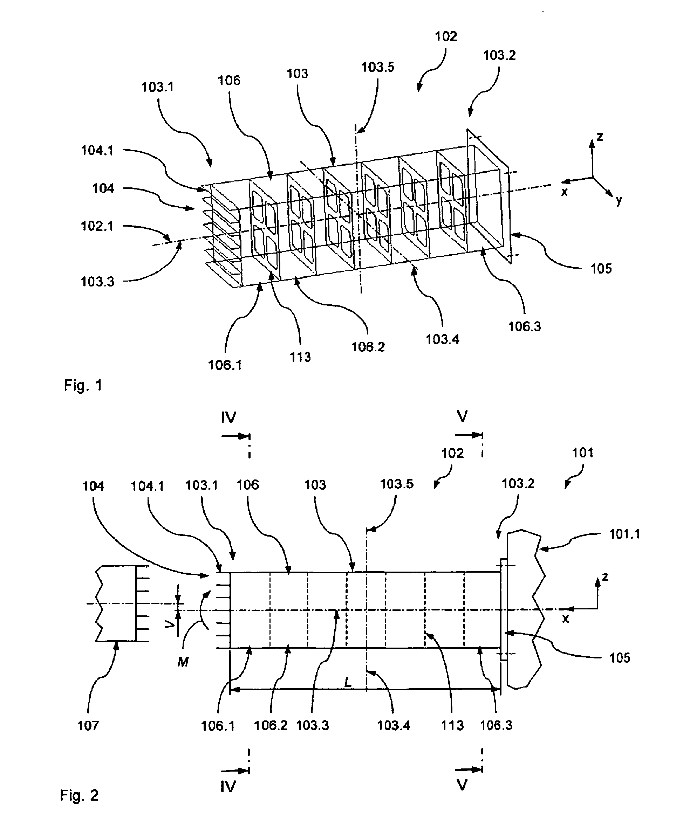

Im Folgenden wird unter Bezugnahme auf die Figuren 1 bis 7 ein bevorzugtes Ausführungsbeispiel eines erfindungsgemäßen Fahrzeugs in Form eines Schienenfahrzeugs 101 beschrieben, welches eine bevorzugte Ausführungsform des erfindungsgemäßen Stoßenergieverzehrelements in Form eines Crashabsorbers 102 umfasst.

Zum einfacheren Verständnis der nachfolgenden Erläuterungen ist in den Figuren ein Koordinatensystem angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 definiert.

Das Schienenfahrzeug 101 umfasst eine herkömmliche Fahrzeugstruktur 101.1, beispielsweise eine Wagenkastenstruktur, an deren vorderem Ende der Crashabsorber 102 lösbar befestigt ist. Der Crashabsorber 102 ist dabei so montiert, dass seine Längsachse 102.1 im wesentlichen parallel zur Längsachse bzw. Längsrichtung des Schienenfahrzeugs 101 verläuft. Der Crashabsorber 102 kann dabei zentral an der Fahrzeugstruktur 101.1 montiert sein, sodass seine Längsachse 102.1 etwa in der vertikalen Längsmittenebene des Schienenfahrzeugs 101 liegt. In der Regel sind jedoch wenigstens zwei dieser Crashabsorber 102 so an der Fahrzeugstruktur 101.1 montiert, dass sich eine zu dieser vertikalen Längsmittenebene im wesentlichen symmetrische Anordnung ergibt.

Der Crashabsorber 102 umfasst einen Elementkörper 103 mit einem vorderen freien Ende 103.1 und einem hinteren Ende 103.2. Das vordere freie Ende 103.1 ist im Crashfall einem Stoßpartner zugewandt und trägt eine Aufkletterschutzeinrichtung 104 in Form einer Prallplatte mit mehreren in Querrichtung des Fahrzeugs verlaufenden Rippen 104.1. Solche Aufkletterschutzeinrichtungen sind hinlänglich bekannt, so dass hierauf nicht näher eingegangen werden soll. Am hinteren Ende 103.2 des Elementkörpers ist eine Befestigungseinrichtung in Form eines Montageflansches 105 vorgesehen, über den der Crashabsorber 102 mit der Fahrzeugstruktur 101.1 lösbar verbunden ist.

Wie Figur 1 zu entnehmen ist, definiert der Elementkörper 103 eine Längsachse 103.3, die mit der Längsachse 102.1 des Crashabsorbers 102 zusammenfällt, eine Querachse 103.4, die in Querrichtung des Fahrzeugs ausgerichtet ist, sowie eine Hochachse 103.5, die in Höhenrichtung des Fahrzeugs ausgerichtet ist.

Wie den Figuren 1 und 2 weiterhin zu entnehmen ist, umfasst der Elementkörper 103 eine Reihe von sieben in Richtung der Längsachse 103.3 seriell angeordneten Sektionen 106, zu denen eine erste Sektion 106.1, eine zweite Sektion 106.2 und eine dritte Sektion in Form der letzten Sektion 106.3 gehören. Die Sektionen 106 weisen jeweils eine über ihre Länge (Abmessung in Richtung der Längsachse 103.3) im wesentlichen gleich bleibende, von Sektion zu Sektion aber unterschiedliche Biegesteifigkeit B um die Querachse 103.4 auf. Es sei an dieser Stelle angemerkt, dass hier vereinfachend von einer Biegesteifigkeit der jeweiligen Sektion um die Querachse 103.4 gesprochen wird. Dies soll im Sinne der vorliegenden Erfindung die jeweilige Biegesteifigkeit der Sektion um eine in der betrachteten, zur Längsachse 103.3 senkrechten Schnittebene liegende Querachse bezeichnen, die parallel zur Querachse 103.4 verläuft.

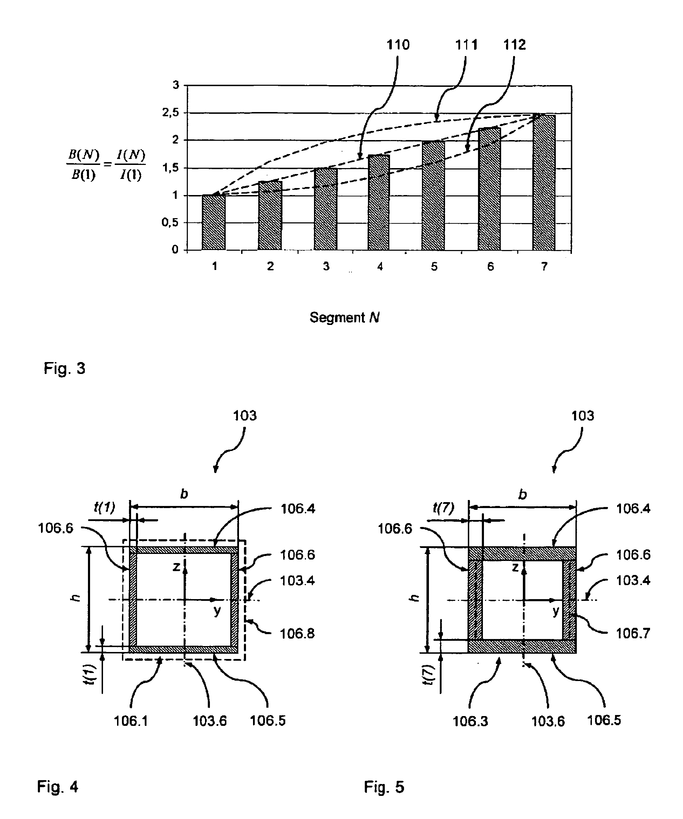

Die Figur 3 zeigt für die jeweilige Sektion 106 mit der Nummer N das Verhältnis ihrer Biegesteifigkeit $B(N)$ zur Biegesteifigkeit $B(1)$ der ersten Sektion 106.1. Die Nummerierung der Sektionen 106 beginnt dabei am vorderen Ende 103.1 des Elementkörpers 103 mit der ersten Sektion 106.1 und schreitet zum hinteren Ende 103.2 des Elementkörpers 103 fort.

Wie der Figur 3 zu entnehmen ist, nimmt die (über die Länge der jeweiligen Sektion im wesentlichen konstante) Biegesteifigkeit $B$ der Sektionen 106 und damit das Verhältnis

$$VB = \frac{B(N)}{B(1)} \qquad\qquad (2)$$

mit fortschreitender Sektionsnummer N stetig zu.

Diese sektionsweise Abstufung der Biegesteifigkeit $B$ ist (wie im Folgenden noch näher erläutert wird) von Vorteil, wenn es zu einer Kollision mit einem Stoßpartner ohne gleichmäßige Belastung der Prallplatte 104 kommt. Dies kann beispielsweise bei einem Zusammenprall mit einem anderen Schienenfahrzeug der Fall sein, dessen ansonsten gleichartig aufgebaute Crashabsorber 107 einen vertikalen Versatz $V$ zu dem Crashabsorber 102 aufweisen, wie dies in Figur 2 gezeigt ist.

Der vertikale Versatz und damit die ungleichmäßige Belastung der Prallplatte 104 resultiert in der Einleitung eines Biegemoments $M$ um eine zur Querachse 103.4 parallele Achse in den Elementkörper 103. Dieses Biegemoment $M$ kann bei herkömmlichen Crashabsorbern zu einer globalen Biegeverformung des Crashabsorbers entlang seiner Längsachse bis hin zum Abknicken führen, welche den gleichmäßigen Prozess der lokalen Energieabsorption, beispielsweise einen lokalen Faltungsprozess reduziert oder sogar unterbricht.

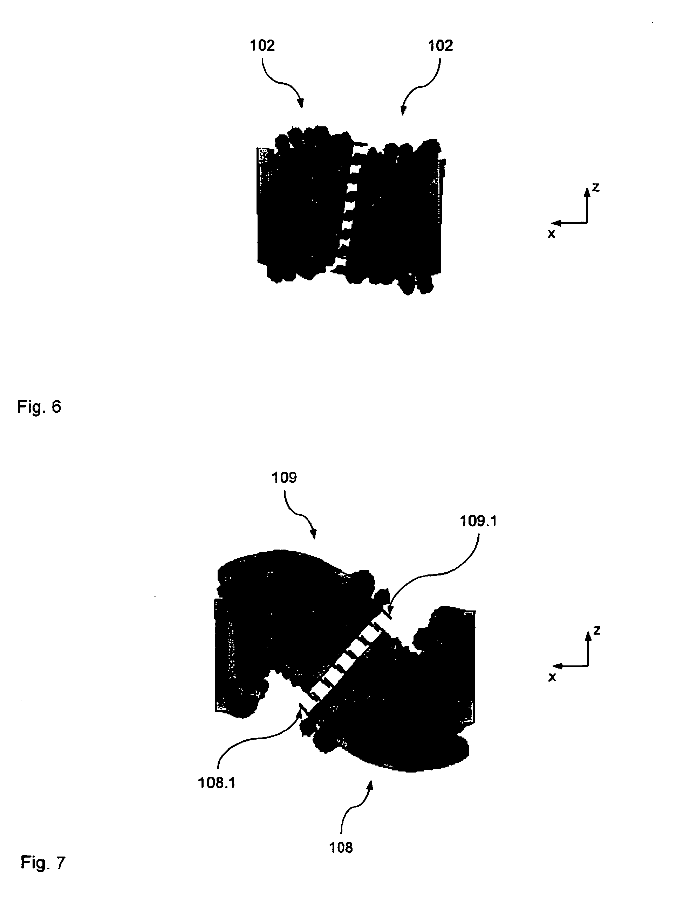

Die Figur 7 zeigt das Ergebnis eines versetzten Aufpralls zweier die Schienenfahrzeuge mit herkömmlichen Crashabsorbern 108 und 109, bei denen es als Folge eines durch den vertikalen Versatz bedingten Biegemoments zu einer globalen Biegeverformung des jeweiligen Crashabsorbers 108, 109 gekommen ist. Deutlich zu erkennen ist die hieraus resultierende starke Rotation des Kontaktbereichs der Crashabsorber 108, 109, also der Prallplatten 108.1 und 109.1 in der Zeichnungsebene. Geht diese Rotation weit genug, kann es sein, dass die Querrippen der Prallplatten 108.1 bzw. 109.1 versagen und die beiden Prallplatten 108.1 und 109.1 aneinander abgleiten, sodass es zu einem so genannten Aufklettern des einen Fahrzeugs auf das andere Fahrzeug kommt.

Eine weitere Konsequenz dieser globalen Biegeverformung der Crashabsorber 108 und 109 ist die Reduktion oder gar Unterbrechung des gleichmäßigen lokal fortschreitenden Faltungsprozesses, der im Wesentlichen für die hohe Energieabsorption solcher Crashabsorber verantwortlich ist. Dies führt zu einer dramatischen Reduktion der Energieabsorptionsfähigkeit des jeweiligen Crashabsorbers 108, 109 und damit zu erhöhten Belastungen und Beschleunigungen der übrigen Fahrzeugstruktur sowie der Passagiere des Fahrzeuges, welche unbedingt zu vermeiden sind.

Bei dem erfindungsgemäßen Crashabsorber 102 führt die sektionsweise Abstufung der Biegesteifigkeit des Elementkörpers 103 um die Querachse 103.4 dazu, dass sich eine durch das Biegemoment $M$ bedingte globale Biegeverformung zunächst auf die Sektion mit der geringsten Biegesteifigkeit konzentriert, im vorliegenden Beispiel also auf die erste Sektion 106.1. Die Biegeverformung konzentriert sich somit lediglich auf ein Siebtel der Länge des Elementkörpers 103 und damit auf einen vergleichsweise kurzen Abschnitt des Elementkörpers 103, während die anderen Sektionen 106 zumindest einer deutlich geringeren Biegeverformung unterliegen. Führt die Biegeverformung der ersten Sektion 106.1 dabei zu einer Reduktion oder sogar Unterbrechung des lokalen Prozesses der Energieabsorption (im vorliegenden Beispiel also der lokalen Faltung der ersten Sektion 106.1) beschränkt sich dies zunächst nur auf die erste Sektion 106.1 mit der geringsten Biegesteifigkeit. Bis die nächste Sektion, hier also die zweite Sektion 106.2 betroffen ist, kann aber bereits ausreichend Stoßenergie abgebaut sein, sodass es zu keiner solchen unerwünschten Biegeverformung dieser nachfolgenden zweiten Sektion 106.2 mehr kommt und bei dieser dann der gewünschte Energieabsorptionsprozess, also die fortschreitende lokale Faltung, abläuft.

Die sektionsweise Abstufung der Biegesteifigkeit $B$ hat dabei gegenüber einer kontinuierlichen Erhöhung der Biegesteifigkeit den Vorteil, dass sich die globale Biegeverformung, sofern sie eintritt, jeweils auf einen klar definierten Bereich vorgegebener Länge und konstanter Biegesteifigkeit $B$ konzentriert, nämlich die schwächste Sektion, hier also die erste Sektion 106.1 mit der geringsten Biegesteifigkeit $B$.

Die Abstufung Biegesteifigkeit $B$ zwischen der schwächsten, ersten Sektion 106.1 mit der geringsten Biegesteifigkeit $B$ und der benachbarten zweiten Sektion 106.2 mit der nächsthöheren Biegesteifigkeit $B$ ist ausreichend groß gewählt, um eine definierte Konzentration der globalen Biegeverformung auf die erste Sektion 106.1 zu erzielen. Im vorliegenden Beispiel beträgt die Biegesteifigkeit $B(2)$ der zweiten Sektion 106.2 etwa das 1,25fache der Biegesteifigkeit $B(1)$ der ersten Sektion 106.1, d. h. es gilt:

$$\frac{B(2)}{B(1)} = k = 1,25. \tag{3}$$

Es versteht sich jedoch, dass bei anderen Varianten der Erfindung auch eine andere Abstufung zwischen der schwächsten Sektion und der nächst-schwächsten Sektion vorliegen kann. Diese richtet sich insbesondere auch nach der Länge der Sektionen.

Die relative Abstufung der Biegesteifigkeit $B$ zwischen den nachfolgenden Sektionen kann das gleiche Maß aufweisen wie zwischen der ersten Sektion 106.1 und der zweiten Sektion 106.2. Vorzugsweise ist jedoch vorgesehen, dass sich die relative Abstufung reduziert, um die Fähigkeit zum primär erwünschten hohen Energieverzehr der nachfolgenden Sektionen 106 nicht durch eine allzu starke Erhöhung der Biegesteifigkeit $B$ zu beeinträchtigen. Im vorliegenden Beispiel ist die Abstufung der Biegesteifigkeit $B$ daher so gewählt, dass die Biegesteifigkeit $B(7)$ der letzten Sektion 106.3 etwa das 2,50-fache der Biegesteifigkeit $B(1)$ der ersten Sektion 106.1 beträgt, d. h. es gilt:

$$\frac{B(7)}{B(1)} = j = 2,50. \tag{4}$$

Wie der Linie 110 aus Figur 3 zu entnehmen ist, nimmt das Verhältnis $VB$ gemäß der Gleichung (2) und damit die Biegesteifigkeit $B$ der Sektionen 106 bezogen auf die Sektionsnummer $N$ linear zu. Hiermit lässt sich auch bei einem in Crashfall wirkenden hohen Biegemoment $M$ eine günstige Verformung des Crashabsorbers 102 mit einer weit gehend ungestörten hohen Energieabsorption durch fortschreitende lokale Faltung des Elementkörpers 103 erzielen, wie sie im Ergebnis in Figur 6 für eine Kollision mit vertikalem Versatz zweier Schienenfahrzeuge mit Crashabsorbern 102 dargestellt ist.

Es versteht sich jedoch, dass bei anderen Varianten der Erfindung auch ein anderer Verlauf der Biegesteifigkeit $B$ vorgesehen sein kann. So kann beispielsweise ein zunächst schneller und dann abflachender sektionsweiser Anstieg vorgesehen sein, wie dies in Figur 3 durch die Linie 111 angedeutet ist. Ebenso kann ein zunächst langsamer und dann immer stärker steigender sektionsweiser Anstieg vorgesehen sein, wie dies in Figur 3 durch die Linie 112 angedeutet ist. Ein solcher nicht-linearer Verlauf kann insbesondere dann sinnvoll sein, wenn die Sektionen des Elementkörpers eine unterschiedliche Länge aufweisen, wobei vor allem für der schwächsten Sektion nachfolgende, längere Sektionen ein stärkerer Anstieg der Biegesteifigkeit $B$ von Vorteil ist.

Die Abstufung der Biegesteifigkeit $B$ kann auf unterschiedliche Weise erfolgen. So kann beispielsweise vorgesehen sein, dass die Sektionen 106 bei gleicher Geometrie aus unterschiedlichen Werkstoffen oder Werkstoffkombinationen aufgebaut sind, die in einem entsprechend unterschiedlichen Elastizitätsmodul $E$ der Sektionen 106 und damit gemäß der Gleichung (1) in einer unterschiedlichen Biegesteifigkeit $B$ resultieren. Dabei kann sich der Bereich der abweichenden Werkstoffe in Richtung der Längsachse 103.3 nur auf einen Teil der jeweiligen Sektion beschränken. Bevorzugt ist die jeweilige Sektion 106 jedoch über ihre gesamte Länge aus einem entsprechenden Werkstoff bzw. einer entsprechenden Werkstoffkombination aufgebaut.

Im vorliegenden Beispiel wird die Abstufung der Biegesteifigkeit $B$ geometrisch über eine Änderung des Querschnitts der Sektionen 106 erzielt. Wie den Figuren 1, 2, 4 und 5 zu entnehmen ist, ist der Elementkörper 103 nach Art eines Rohres bzw. Hohlkastenprofils mit im Wesentlichen rechteckigem Querschnitt ausgebildet. Dabei weisen die sieben Sektionen 106 in Schnittebenen senkrecht zur Längsachse 103.3 jeweils einen Querschnitt mit quadratischer Außenkontur auf. Diese Außenkontur hat für alle Sektionen sowohl die gleiche Breite $b$ (Abmessung in Richtung der Querachse 103.4) als auch die gleiche Höhe $h$ (Abmessung in Richtung der Hochachse 103.5). Hierdurch ergibt sich ein Elementkörper 103 und damit ein Crashabsorber 102 mit über seine Länge konstanten Außenabmessungen.

Jede der Sektionen 106 ist aus vier Wandabschnitten, nämlich einem Obergurt 106.4 mit rechteckigem Querschnitt, einem Untergurt 106.5 mit rechteckigem Querschnitt und zwei Seitenwänden 106.6 mit ebenfalls rechteckigem Querschnitt aufgebaut. Der Obergurt 106.4, der Untergurt 106.5 und die Seitenwände 106.6 weisen dabei innerhalb einer Sektion jeweils dieselbe Wandstärke $t$ auf.

Die Sektionen 106 sind wegen der einfachen Herstellbarkeit als Schweißkonstruktion ausgeführt. Es versteht sich jedoch, dass die Sektionen 106 bei anderen Varianten der Erfindung auch durch einen Strangpressprofil oder dergleichen gebildet sein können.

Um die oben beschriebene Abstufung der Biegesteifigkeit $B$ zu erzielen, sind die Wandstärken $t$ der Sektionen 106 unterschiedlich groß gewählt. So hat die erste Sektion 106.1 eine Wandstärke $t(1)$, die kleiner ist als die Wandstärke der übrigen Sektionen. Die Wandstärke der Sektionen 106 nimmt schrittweise von Sektion zu Sektion zu, sodass die letzte Sektion 106.3 die größte Wandstärke $t(7)$ aufweist.

In einer Ebene senkrecht zur Längsachse 103.3 weist der Querschnitt der jeweiligen Sektion um die Querachse 103.4 in dem vorliegenden Beispiel mit quadratischer Außenkontur (d. h. $b = h$) und überall gleicher Wandstärke $t$ somit folgendes Flächenträgheitsmoment $I$ auf:

$$I = \frac{h^4 - (h-t)^4}{12}. \tag{5}$$

Wie der Gleichung (5) ohne weiteres zu entnehmen ist, werden über die unterschiedlich großen Wandstärken $t$ unterschiedlich große Flächenträgheitsmomente $I$ der Sektionen 106 um die Querachse 103.4 realisiert, die gemäß der Gleichung (1) zu einer unterschiedlichen Biegesteifigkeit $B$ der Sektionen 106 führen.

Im vorliegenden Beispiel wird bei einem Elementkörper 103 der Länge L = 1360 mm und einer Breite bzw. Höhe $b = h$ = 400 mm die beschriebene Abstufung ausgehend von einer ersten Wandstärke $t(1)$ = 2 mm über eine moderate Erhöhung der Wandstärke von Sektion zu Sektion um $\Delta t$ = 0,5 mm erzielt.

Es versteht sich jedoch, dass bei anderen Varianten der Erfindung auch vorgesehen sein kann, dass die Erhöhung des Flächenträgheitsmoments auf andere Weise erzielt wird. So kann beispielsweise vorgesehen sein, dass nur die Wandstärke des Obergurtes 106.4 und des Untergurtes 106.5 variiert wird, während die Wandstärke der Seitenwände 106.6 über einen Teil oder die ganze Länge des Elementkörpers 103 konstant bleibt, wie dies in Figur 5 durch die gestrichelte Kontur 106.7 angedeutet ist. Dies hat den Vorteil, dass für die Seitenwände 106.6 aller Sektionen 106 jeweils ein einziges Bauteil verwendet werden kann. Dies erleichtert wiederum die Herstellung und die Belastbarkeit des Elementkörpers 103.

Weiterhin kann vorgesehen sein, dass zur Erhöhung des Flächenträgheitsmoments $I$ der Abstand des jeweiligen Flächenschwerpunkts der Querschnittsfläche der Obergurte und der Untergurte zur Querachse 103.4 erhöht wird, wie dies in Figur 4 durch die gestrichelte Kontur 106.8 angedeutet ist. Dies kann zum einen dadurch erfolgen, dass der Obergurt und der Untergurt bei gleich bleibender Wandstärke von Sektion zu Sektion in größerer Entfernung von der Querachse 103.4 angeordnet werden. Zusätzlich oder alternativ kann die Wandstärke des Obergurtes und des Untergurtes von Sektion zu Sektion entsprechend erhöht werden.

Wie den Figuren 1 und 2 zu entnehmen ist, sind im Inneren des Elementkörpers Trennelemente in Form von durchbrochen Trennwänden 113 angeordnet. Diese Trennwände 113 sind senkrecht zur Längsachse 103.3 angeordnet und dienen zum einen in herkömmlicher Weise dazu, eine definiert fortschreitende lokale Energieabsorption durch definiert fortschreitende lokale Faltung der Sektionen 106 zu unterstützen. Die Trennwände 113 sind dabei jeweils im Anschlussbereich bzw. Übergangsbereich zwischen zwei aneinander angrenzenden Sektionen 106 angeordnet. Hierdurch wird zum einen wegen des dort durch die Änderung der Wandstärke t entstehenden Absatzes eine besonders einfache Befestigung der Trennwände 113 erzielt. Zudem bewirken die Trennwände 113 an dieser Stelle eine zusätzliche Versteifung, welche hinsichtlich der globalen Biegeverformung eine schärfere Abgrenzung der Sektionen und damit in vorteilhafter Weise die Konzentration der globalen Biegeverformung auf die jeweils schwächste Sektion unterstützt.

Die vorliegende Erfindung wurde vorstehend ausschließlich anhand von Beispielen beschrieben, bei denen eine durchgehende Zunahme der Biegesteifigkeit vom freien Ende des Crashabsorbers zum hinteren Montageende des Crashabsorbers vorliegt. Es versteht sich jedoch, dass bei anderen Varianten der Erfindung auch vorgesehen sein kann, dass die Biegesteifigkeit vom hinteren Ende des Crashabsorbers zum freien Ende hin zunimmt. Ebenso ist es möglich, dass einem Anstieg der Biegesteifigkeit zumindest zwischenzeitlich ein Abfall der Biegesteifigkeit folgt.

Weiterhin wurde die vorliegende Erfindung vorstehend ausschließlich anhand von Beispielen beschrieben, bei denen die sektionsweise Variation der Biegesteifigkeit entweder über den Werkstoff oder über die Geometrie der Sektionen erzielt wurde. Es versteht sich jedoch, dass bei anderen Varianten der Erfindung auch eine Kombination dieser Möglichkeiten zur Variation der Biegesteifigkeit vorgesehen sein kann.

Schließlich wurde die vorliegende Erfindung vorstehend ausschließlich anhand von Beispielen aus dem Bereich der Schienenfahrzeuge beschrieben. Es versteht sich jedoch, dass die Erfindung auch in Verbindung mit beliebigen anderen Fahrzeugen zum Einsatz kommen kann.

**Patentansprüche**

1. Stoßenergieverzehrelement für ein Schienenfahrzeug mit

 - einem Elementkörper (103), der eine Längsachse (103.3) und eine senkrecht zur Längsachse (103.3) verlaufende Querachse (103.4) definiert, wobei
 - der Elementkörper (103) wenigstens eine erste Sektion (106.1) zum Verzehr von Stoßenergie umfasst, die sich in Richtung der Längsachse (103.3) erstreckt und eine über die Länge der ersten Sektion im Wesentlichen gleich bleibende erste Biegesteifigkeit um die Querachse (103.4) aufweist,
 - der Elementkörper (103) wenigstens eine zweite Sektion (106.2) zum Verzehr von Stoßenergie umfasst, die sich in Richtung der Längsachse (103.3) erstreckt und eine über die Länge der zweiten Sektion im Wesentlichen gleich bleibende zweite Biegesteifigkeit um die Querachse (103.4) aufweist,
 - die erste Sektion (106.1) und die zweite Sektion (106.2) in Richtung der Längsachse (103.3) benachbart angeordnet sind und
 - die erste Biegesteifigkeit von der zweiten Biegesteifigkeit verschieden ist, **dadurch gekennzeichnet, dass**
 - die zweite Biegesteifigkeit das $k$-fache der ersten Biegesteifigkeit beträgt, wobei
 - der Faktor $k$ den Wert 1,05 bis 1,40, vorzugsweise 1,10 bis 1,30, weiter vorzugsweise 1,10 bis 1,25, aufweist.

2. Stoßenergieverzehrelement nach Anspruch 1, **dadurch gekennzeichnet, dass**

 - die erste Sektion (106.1) in einer Ebene senkrecht zur Längsachse (103.3) einen ersten Querschnitt mit einem ersten Flächenträgheitsmoment um die Querachse (103.4) aufweist,
 - die zweite Sektion (106.2) in einer Ebene senkrecht zur Längsachse (103.3) einen zweiten Querschnitt mit einem zweiten Flächenträgheitsmoment um die Querachse (103.4) aufweist und
 - das erste Flächenträgheitsmoment von dem zweiten Flächenträgheitsmoment verschieden ist, insbesondere das erste Flächenträgheitsmoment kleiner ist als das zweite Flächenträgheitsmoment.

3. Stoßenergieverzehrelement nach Anspruch 2, **dadurch gekennzeichnet, dass**

 - die erste Sektion (106.1) einen ersten Wandabschnitt (106.4) aufweist, der einen ersten Querschnittsteil des ersten Querschnitts ausbildet, wobei der erste Querschnittsteil einen ersten Flächenschwerpunkt aufweist, der in der Ebene des ersten Querschnitts einen ersten Abstand von der Querachse (103.4) aufweist,
 - die zweite Sektion (106.2) einen zweiten Wandabschnitt (106.4) aufweist, der einen zweiten Querschnittsteil des zweiten Querschnitts ausbildet, wobei der zweite Querschnittsteil einen zweiten Flächenschwerpunkt aufweist, der in der Ebene des zweiten Querschnitts einen zweiten Abstand von der Querachse (103.4) aufweist,

- der erste Abstand von dem zweiten Abstand verschieden ist, insbesondere der erste Abstand kleiner ist als der zweite Abstand.

4. Stoßenergieverzehrelement nach Anspruch 2 oder 3, **dadurch gekennzeichnet, dass**

- die erste Sektion (106.1) wenigstens einen ersten Wandabschnitt (106.4, 106.5) aufweist, der wenigstens einen ersten Querschnittsteil des ersten Querschnitts ausbildet und eine erste Wandstärke aufweist,
- die zweite Sektion (106.2) wenigstens einen zweiten Wandabschnitt (106.4, 106.5) aufweist, der wenigstens einen zweiten Querschnittsteil des zweiten Querschnitts ausbildet und eine zweite Wandstärke aufweist, und
- die erste Wandstärke von der zweiten Wandstärke verschieden ist, insbesondere die erste Wandstärke kleiner ist als die zweite Wandstärke, wobei
- der erste Wandabschnitt (106.4, 106.5) und/oder der zweite Wandabschnitt (106.4, 106.5) insbesondere von der Querachse (103.4) beabstandet ist sowie der erste Wandabschnitt (106.4, 106.5) und/oder der zweite Wandabschnitt (106.4, 106.5) insbesondere einen im Wesentlichen rechteckförmigen Querschnitt aufweist.

5. Stoßenergieverzehrelement nach einem der vorhergehenden Ansprüche, **dadurch gekennzeichnet, dass**

- zumindest ein erster Sektionsteil der ersten Sektion (106.1) aus einem ersten Werkstoff gebildet ist, der in Richtung der Längsachse (103.3) einen ersten Elastizitätsmodul aufweist,
- zumindest ein zweiter Sektionsteil der zweiten Sektion (106.2) aus einem zweiten Werkstoff gebildet ist, der in Richtung der Längsachse (103.3) einen zweiten Elastizitätsmodul aufweist, und
- der erste Elastizitätsmodul von dem zweiten Elastizitätsmodul verschieden ist, insbesondere der erste Elastizitätsmodul kleiner ist als der zweite Elastizitätsmodul, wobei
- sich der erste Sektionsteil in Richtung der Längsachse (103.3) insbesondere im Wesentlichen über die gesamte erste Sektion (106.1) erstreckt
und/oder
- sich der zweite Sektionsteil in Richtung der Längsachse (103.3) insbesondere im Wesentlichen über die gesamte zweite Sektion (106.2) erstreckt.

6. Stoßenergieverzehrelement nach einem der vorhergehenden Ansprüche, **dadurch gekennzeichnet, dass**

- der Elementkörper (103) ein freies Ende (103.1) aufweist, das im Betrieb einem Stoßpartner zugewandt ist,
- die erste Sektion (106.1) näher an dem freien Ende (103.1) angeordnet ist als die zweite Sektion (106.2) und
- die erste Biegesteifigkeit kleiner ist als die zweite Biegesteifigkeit.

7. Stoßenergieverzehrelement nach einem der vorhergehenden Ansprüche, **dadurch gekennzeichnet, dass**

- der Elementkörper (103) wenigstens eine dritte Sektion (106.3) zum Verzehr von Stoßenergie umfasst, die sich in Richtung der Längsachse (103.3) erstreckt und eine dritte Biegesteifigkeit um die Querachse (103.4) aufweist, und
- die dritte Biegesteifigkeit von der ersten Biegesteifigkeit und/oder der zweiten Biegesteifigkeit verschieden ist.

8. Stoßenergieverzehrelement nach Anspruch 7, **dadurch gekennzeichnet, dass**

- der Elementkörper (103) ein freies Ende (103.1) aufweist, das im Betrieb einem Stoßpartner zugewandt ist,
- die erste Sektion (106.1) näher an dem freien Ende (103.1) angeordnet ist als die zweite Sektion (106.2) und die zweite Sektion (106.2) näher an dem freien Ende (103.2) angeordnet ist als die dritte Sektion (106.3) und
- die erste Biegesteifigkeit kleiner ist als die zweite Biegesteifigkeit und die zweite Biegesteifigkeit kleiner ist als die dritte Biegesteifigkeit, wobei
- insbesondere die erste Sektion (106.1) an dem freien Ende (103.1) angeordnet ist und die dritte Sektion (106.3) an dem anderen Ende (103.2) des Elementkörper (103) angeordnet ist und die dritte Biegesteifigkeit das j-fache der ersten Biegesteifigkeit ist, wobei der Faktor j den Wert 2,0 bis 3,0, vorzugsweise 2,3 bis 2,8, weiter vorzugsweise 2,4 bis 2,6, aufweist.

9. Stoßenergieverzehrelement nach einem der vorhergehenden Ansprüche, **dadurch gekennzeichnet, dass**

- der Elementkörper eine Mehrzahl von *N* in Richtung der Längsachse (103.3) seriell angeordneten Sektionen (106) umfasst, wobei

- die Sektionen (106) jeweils eine entlang der Längsachse (103.3) im Wesentlichen konstante Biegesteifigkeit aufweisen und
- die Biegesteifigkeit der Sektionen in Richtung der Längsachse (103.3), insbesondere kontinuierlich, ansteigt, wobei
- insbesondere die Sektionen (106) im Wesentlichen die gleiche Länge in Richtung der Längsachse (103.3) aufweisen und die Biegesteifigkeit der Sektionen (106) bezogen auf die Nummer $N$ der jeweiligen Sektion (106) im Wesentlichen linear ansteigt.

10. Stoßenergieverzehrelement nach Anspruch 9, **dadurch gekennzeichnet, dass**

- der Elementkörper (103) ein freies Ende (103.1) aufweist, das im Betrieb einem Stoßpartner zugewandt ist, und
- die Biegesteifigkeit der Sektionen (106) ausgehend von dem freien Ende (103.1) des Elementkörpers (103) ansteigt.

11. Stoßenergieverzehrelement nach einem der vorhergehenden Ansprüche, **dadurch gekennzeichnet, dass**

- der Elementkörper (103) rohrförmig ausgebildet ist
und/oder
- wenigstens eine der Sektionen (106) des Elementkörpers in einer Ebene senkrecht zur Längsachse (103) einen Querschnitt mit im Wesentlichen rechteckiger Außenkontur aufweist.

12. Stoßenergieverzehrelement nach einem der vorhergehenden Ansprüche, **dadurch gekennzeichnet, dass**

- die erste Sektion (106.1) und die zweite Sektion (106.2) in einer die Längsachse (103.3) enthaltenden Schnittebene eine Außenabmessung aufweisen, welche entlang der Längsachse (103.3) im Wesentlichen konstant ist, wobei
- die Außenabmessung der ersten Sektion (106.1) und der zweiten Sektion (106.2) insbesondere im wesentlichen identisch ist.

13. Stoßenergieverzehrelement nach einem der vorhergehenden Ansprüche, **dadurch gekennzeichnet, dass**

- im Übergangsbereich zwischen der ersten Sektion (106.1) und der zweiten Sektion (106.2) ein Trennelement (113), insbesondere eine Trennwand, vorgesehen ist, wobei
- das Trennelement (113) eine Haupterstreckungsebene aufweist, die im Wesentlichen senkrecht zur Längsachse (103.3) verläuft.

14. Fahrzeug, insbesondere Schienenfahrzeug, mit einem Stoßenergieverzehrelement (102) nach einem der vorhergehenden Ansprüche.

**Claims**

1. Impact energy absorption element for a rail vehicle having

- an element body (103) which defines a longitudinal axis (103.3) and a transverse axis (103.4) running transverse to the longitudinal axis (103.3), wherein
- the element body (103) comprises at least one first section (106.1) for absorbing impact energy extending in the direction of the longitudinal axis (103.3) and, over the length of the first section, having an essentially uniform first flexural rigidity about the transverse axis (103.4),
- the element body (103) comprises at least one second section (106.2) for absorbing impact energy extending in the direction of the longitudinal axis (103.3) and, over the length of the second section, having an essentially uniform second flexural rigidity about the transverse axis (103.4),
- the first section (106.1) and the second section (106.2) are arranged adjacent to one another in the direction of the longitudinal axis (103.3) and
- the first flexural rigidity differs from the second flexural rigidity,
**characterised in that**
- the second flexural rigidity is $k$ times the first flexural rigidity, wherein
- the factor $k$ has the value of 1.05 to 1.40, preferably 1.10 to 1.30, more preferably 1.10 to 1.25.

2. Impact energy absorption element according to Claim 1, **characterised in that**

- the first section (106.1), in a plane perpendicular to the longitudinal axis (103.3), has a first cross-section having a first area moment of inertia about the transverse axis (103.4),
- the second section (106.2), in a plane perpendicular to the longitudinal axis (103.3), has a second cross-section having a second area moment of inertia about the transverse axis (103.4), and
- the first area moment of inertia differs from the second area moment of inertia, in particular the first area moment of inertia is less than the second area moment of inertia.

3. Impact energy absorption element according to Claim 2, **characterised in that**

- the first section (106.1) has a first wall section (106.4) which forms a first cross-section part of the first cross-section, wherein the first cross-section part has a first centre of area which, in the plane of the first cross-section, is at a first distance from the transverse axis (103.4),
- the second section (106.2) has a second wall section (106.4) which forms a second cross-section part of the second cross-section, wherein the second cross-section part has a second centre of area which, in the plane of the second cross-section, is at a second distance from the transverse axis (103.4),
- the first distance differs from the second distance, in particular the first distance is less than the second distance.

4. Impact energy absorption element according to Claim 2 or 3, **characterised in that**

- the first section (106.1) has at least one first wall section (106.4, 106.5) forming at least one first cross-section part of the first cross-section and having a first wall thickness,
- the second section (106.2) has at least one second wall section (106.4, 106.5) forming at least one second cross-section part of the second cross-section and having a second wall thickness, and
- the first wall thickness differs from the second wall thickness, in particular, the first wall thickness is less than the second wall thickness, wherein
- the first wall section (106.4, 106.5) and/or the second wall section (106.4, 106.5), in particular, is arranged at a distance from the cross-section (103.4) and the first wall section (106.4, 106.5) and/or the second wall section (106.4, 106.5) in particular has an essentially rectangular cross-section.

5. Impact energy absorption element according to any one of the preceding claims, **characterised in that**

- at least one first section part of the first section (106.1) comprises a first material which has a first modulus of elasticity in the direction of the longitudinal axis (103.3),
- at least one second section part of the second section (106.2) comprises a second material which has a second modulus of elasticity in the direction of the longitudinal axis (103.3) and
- the first modulus of elasticity differs from the second modulus of elasticity, in particular, the first modulus of elasticity is less than the second modulus of elasticity, wherein
- the first section part, in particular, extends in the direction of the longitudinal axis (103.3), essentially over the entire first section (106.1),
and/or
- the second section part, in particular, extends in the direction of the longitudinal axis (103.3) essentially over the entire second section (106.2).

6. Impact energy absorption element according to any one of the preceding claims, **characterised in that**

- the element body (103) has a free end (103.1) which, in operation, faces an impact partner,
- the first section (106.1) is arranged closer to the free end (103.1) than the second section (106.2), and
- the first flexural rigidity is less than the second flexural rigidity.

7. Impact energy absorption element according to any one of the preceding claims, **characterised in that**

- the element body (103) comprises at least one third section (106.3) for absorbing impact energy extending in the direction of the longitudinal axis (103.3) and having a third flexural rigidity about the transverse axis (103.4) and
- the third flexural rigidity differs from the first flexural rigidity and/or from the second flexural rigidity.

8. Impact energy absorption element according to Claim 7, **characterised in that**

- the element body (103) has a free end (103.1) which, in operation, faces an impact partner,
- the first section (106.1) is arranged closer to the free end (103.1) than the second section (106.2) and the second section (106.2) is arranged closer to the free end (103.2) than the third section (100.3), and
- the first flexural rigidity is less than the second flexural rigidity and the second flexural rigidity is less than the third flexural rigidity, wherein,
- in particular, the first section (106.1) is arranged at the free end (103.1) and the third section (106.3) is arranged at the other end (103.2) of the element body (103) and the third flexural rigidity is $j$ times the first flexural rigidity, wherein the factor $j$ has a value 2.0 to 3.0, preferably 2.3 to 2.8, more preferably 2.4 to 2.6.

9. Impact energy absorption element according to any one of the preceding claims, **characterised in that**

- the element body comprises a plurality of $N$ sections (106) serially arranged in the direction of the longitudinal axis (103.3), wherein
- each of the sections (106) has an essentially constant flexural rigidity along the longitudinal axis (103.3) and
- the flexural rigidity of the sections increases, in particular continuously, in the direction of the longitudinal axis (103.3), wherein,
- in particular, the sections (106) have essentially the same length in the direction of the longitudinal axis (103.3) and the flexural rigidity of the sections (106) essentially linearly increases related to the number $N$ of the respective section (106).

10. Impact energy absorption element according to Claim 9, **characterised in that**

- the element body (103) has a free end (103.1) which in operation faces an impact partner, and
- the flexural rigidity of the sections (106) increases starting from the free end (103.1) of the element body (103).

11. Impact energy absorption element according to any one of the preceding claims, **characterised in that**

- the element body (103) is tubular
and/or
- at least one of the sections (106) of the element body, in a plane perpendicular to the longitudinal axis (103.3), has a cross-section with an essentially rectangular outer contour.

12. Impact energy absorption element according to any one of the preceding claims, **characterised in that**

- the first section (106.1) and the second section (106.2), in a sectional plane containing the longitudinal axis (103.3), have an external dimension, this external dimension being essentially constant along the longitudinal axis (103.3), wherein
- the external dimensions of the first section (106.1) and of the second section (106.2) are in particular essentially identical.

13. Impact energy absorption element according to any one of the preceding claims, **characterised in that**

- a separating element (113), in particular a separating wall, is provided in the transition area between the first section (106.1) and the second section (106.2), wherein
- the separating element (113) has a plane of main extension which runs essentially perpendicular to the longitudinal axis (103.3).

14. Vehicle, in particular a rail vehicle, having an impact energy absorption element (102) according to any one of the preceding claims.

**Revendications**

1. Élément d'absorption d'énergie d'impact pour véhicule ferroviaire, comportant

- un corps d'élément (103) définissant un axe longitudinal (103.3) et un axe transversal (103.4) s'étendant transversalement à l'axe longitudinal (103.3), dans lequel

- le corps d'élément (103) comprend au moins une première section (106.1) pour absorber de l'énergie d'impact, s'étendant dans la direction de l'axe longitudinal (103.3) et ayant, tout le long de la première section, une première rigidité de flexion essentiellement uniforme autour de l'axe transversal (103.4),
- le corps d'élément (103) comprend au moins une deuxième section (106.2) pour absorber de l'énergie d'impact, s'étendant dans la direction de l'axe longitudinal (103.3) et ayant, tout le long de la deuxième section, une deuxième rigidité de flexion essentiellement uniforme autour de l'axe transversal (103.4),
- la première section (106.1) et la deuxième section (106.2) sont disposées l'une à côté de l'autre dans la direction de l'axe longitudinal (103.3), et
- la première rigidité de flexion est différente de la deuxième rigidité de flexion,

**caractérisé en ce que** :

- la deuxième rigidité de flexion équivaut à *k* fois la première rigidité de flexion, dans lequel
- la valeur du facteur *k* étant de 1,05 à 1,40, de préférence de 1,10 à 1,30, plus préférablement de 1,10 à 1,25.

2. Élément d'absorption d'énergie d'impact selon la revendication 1, **caractérisé en ce que**

- la première section (106.1), dans un plan perpendiculaire à l'axe longitudinal (103.3), présente une première section transversale ayant un premier moment d'inertie de surface autour de l'axe transversal (103.4),
- la deuxième section (106.2), dans un plan perpendiculaire à l'axe longitudinal (103.3), présente une deuxième section transversale ayant un deuxième moment d'inertie de surface autour de l'axe transversal (103.4), et
- le premier moment d'inertie de surface est différent du deuxième moment d'inertie de surface, en particulier le premier moment d'inertie de surface est inférieur au deuxième moment d'inertie de surface.

3. Élément d'absorption d'énergie d'impact selon la revendication 2, **caractérisé en ce que**

- la première section (106.1) présente une première section de paroi (106.4) formant une première partie de section transversale de la première section transversale, la première partie de section transversale présentant un premier centre de surface qui, dans le plan de la première section transversale, se trouve à une première distance de l'axe transversal (103.4),
- la deuxième section (106.2) présente une deuxième section de paroi (106.4) formant une deuxième partie de section transversale de la deuxième section transversale, la deuxième partie de section transversale présentant un deuxième centre de surface qui, dans le plan de la deuxième section transversale, se trouve à une deuxième distance de l'axe transversal (103.4),
- la première distance est différente de la deuxième distance, en particulier la première distance est inférieure à la deuxième distance.

4. Élément d'absorption d'énergie d'impact selon la revendication 2 ou 3, **caractérisé en ce que**

- la première section (106.1) présente au moins une première section de paroi (106.4, 106.5) formant au moins une première partie de section transversale de la première section transversale, et présentant une première épaisseur de paroi,
- la deuxième section (106.2) présente au moins une deuxième section de paroi (106.4, 106.5) formant au moins une deuxième partie de section transversale de la deuxième section transversale, et présentant une deuxième épaisseur de paroi, et
- la première épaisseur de paroi est différente de la deuxième épaisseur de paroi, en particulier la première épaisseur de paroi est inférieure à la deuxième épaisseur de paroi, dans lequel
- la première section de paroi (106.4, 106.5) et/ou la deuxième section de paroi (106.4, 106.5), en particulier, sont disposées à une distance de la section transversale (103.4), et la première section de paroi (106.4, 106.5) et/ou la deuxième section de paroi (106.4, 106.5) en particulier présentent une section transversale essentiellement rectangulaire.

5. Élément d'absorption d'énergie d'impact selon l'une quelconque des revendications précédentes, **caractérisé en ce que**

- au moins une première partie de section de la première section (106.1) comprend un premier matériau présentant un premier module d'élasticité dans la direction de l'axe longitudinal (103.3),
- au moins une deuxième partie de section de la deuxième section (105.2) comprend d'un deuxième matériau présentant un deuxième module d'élasticité dans la direction de l'axe longitudinal (103.3), et

- le premier module d'élasticité est différent du deuxième module d'élasticité, en particulier, le premier module d'élasticité est inférieur au deuxième module d'élasticité, dans lequel

- la première partie de section, en particulier, s'étend dans la direction de l'axe longitudinal (103.3) essentiellement sur l'ensemble de la première section (106.1),

et/ou

- la deuxième partie de section, en particulier, s'étend dans la direction de l'axe longitudinal (103.3) essentiellement sur l'ensemble de la deuxième section (106.2).

**6.** Élément d'absorption d'énergie d'impact selon l'une quelconque des revendications précédentes, **caractérisé en ce que**

- le corps d'élément (103) présente une extrémité libre (103.1) qui, en fonctionnement, fait face à un partenaire d'impact,
- la première section (106.1) est disposée plus près de l'extrémité libre (103.1) que la deuxième section (106.2), et
- la première rigidité de flexion est inférieure à la deuxième rigidité de flexion.

**7.** Élément d'absorption d'énergie d'impact selon l'une quelconque des revendications précédentes, **caractérisé en ce que**

- le corps d'élément (103) comprend au moins une troisième section (106.3) pour absorber de l'énergie d'impact, s'étendant dans la direction de l'axe longitudinal (103.3), et ayant une troisième rigidité de flexion autour de l'axe transversal (103.4), et
- la troisième rigidité de flexion est différente de la première rigidité de flexion et/ou de la deuxième rigidité de flexion.

**8.** Élément d'absorption d'énergie d'impact selon la revendication 7, **caractérisé en ce que**

- le corps d'élément (103) présente une extrémité libre (103.1) qui, en fonctionnement, fait face à un partenaire d'impact,
- la première section (106.1) est disposée plus près de l'extrémité libre (103.1) que la deuxième section (106.2), et la deuxième section (106.2) est disposée plus près de l'extrémité libre (103.2) que la troisième section (106.3), et
- la première rigidité de flexion est inférieure à la deuxième rigidité de flexion, et la deuxième rigidité de flexion est inférieure à la troisième rigidité de flexion, dans lequel,
- en particulier, la première section (106.1) est disposée au niveau de l'extrémité libre (103.1), la troisième section (108.3) est disposée à l'extrémité opposée (103.2) du corps d'élément (103), et la troisième rigidité de flexion équivaut à $j$ fois la première rigidité de flexion, dans lequel le facteur $j$ a une valeur de 2,0 à 3,0, de préférence de 2,3 à 2,8, plus préférablement de 2,4 à 2,6.

**9.** Élément d'absorption d'énergie d'impact selon l'une quelconque des revendications précédentes, **caractérisé en ce que**

- le corps d'élément comprend une pluralité de $N$ sections (106) disposées en série dans la direction de l'axe longitudinal (103.3), dans lequel
- chacune des sections (106) présente une rigidité de flexion essentiellement constante le long de l'axe longitudinal (103.3), et
- la rigidité de flexion des sections augmente, en particulier de manière continue, dans la direction de l'axe longitudinal (103.3), dans lequel,
- en particulier, les sections (106) présentent essentiellement la même longueur dans la direction de l'axe longitudinal (103.3), et la rigidité de flexion des sections (106) augmente de manière essentiellement linéaire en fonction du nombre $N$ de la section respective (106).

**10.** Élément d'absorption d'énergie d'impact selon la revendication 9, **caractérisé en ce que**

- le corps d'élément (103) présente une extrémité libre (103.1) qui, en fonctionnement, fait face à un partenaire d'impact, et
- la rigidité de flexion des sections (106) augmente depuis l'extrémité libre (103.1) du corps d'élément (103).

11. Élément d'absorption d'énergie d'impact selon l'une quelconque des revendications précédentes, **caractérisé en ce que**

- le corps d'élément (103) est tubulaire,
et/ou
- au moins une des sections (106) du corps d'élément, dans un plan perpendiculaire à l'axe longitudinal (103.3), présente une section transversale avec un contour extérieur essentiellement rectangulaire.

12. Élément d'absorption d'énergie d'impact selon l'une quelconque des revendications précédentes, **caractérisé en ce que**

- la première section (106.1) et la deuxième section (106.2), dans un plan de coupe contenant l'axe longitudinal (103.3), présentent une dimension extérieure, cette dimension extérieure étant essentiellement constante le long de l'axe longitudinal (103.3), dans lequel
- les dimensions extérieures de la première section (106.1) et de la deuxième section (106.2) sont, en particulier, essentiellement identiques.

13. Élément d'absorption d'énergie d'impact selon l'une quelconque des revendications précédentes, **caractérisé en ce que**

- un élément de séparation (113), en particulier une paroi de séparation, est prévu dans la zone de transition entre la première section (106.1) et la deuxième section (106.2), dans lequel
- l'élément de séparation (113) présente un plan d'extension principal, s'étendant essentiellement perpendiculairement à l'axe longitudinal (103.3).

14. Véhicule, en particulier véhicule ferroviaire, comprenant un élément d'absorption d'énergie d'impact selon l'une quelconque des revendications précédentes.

Fig. 1

Fig. 2

$$\frac{B(N)}{B(1)} = \frac{I(N)}{I(1)}$$

Segment *N*

Fig. 3

Fig. 4

Fig. 5

102                    102

Fig. 6

109                    109.1

108.1

108

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20117536 U1
- EP 0831005 A1
- EP 0548352 A1
- US 5732801 A
- DE 2624188 A1
- US 2002167183 A1

**In der Beschreibung aufgeführte Nicht-Patentliteratur**

- Railway Applications - Crashworthiness requirements for railway vehicle bodies. European Standard Draft prEN 15227. European Committee for Standardization, April 2005